Europäisches Patentamt

European Patent Office

Office européen des brevets

(11) Veröffentlichungsnummer: **0 521 566 A2**

## (12) EUROPÄISCHE PATENTANMELDUNG

(21) Anmeldenummer: **92201930.2**

(22) Anmeldetag: **29.06.92**

(51) Int. Cl.5: **H04N 7/01**

(30) Priorität: **01.07.91 DE 4121718**

(43) Veröffentlichungstag der Anmeldung:
**07.01.93 Patentblatt 93/01**

(84) Benannte Vertragsstaaten:
**DE FR GB**

(71) Anmelder: **Philips Patentverwaltung GmbH**
**Wendenstrasse 35 Postfach 10 51 49**
**W-2000 Hamburg 1(DE)**

(84) **DE**

(71) Anmelder: **N.V. Philips' Gloeilampenfabrieken**
**Groenewoudseweg 1**
**NL-5621 BA Eindhoven(NL)**

(84) **FR GB**

(72) Erfinder: **Riegel, Maximilian, c/o Philips**
**Patentverw. Gmbh**
**Wendenstrasse 35**
**W-2000 Hamburg 1(DE)**

(74) Vertreter: **Volmer, Georg et al**
**Philips Patentverwaltung GmbH**
**Wendenstrasse 35, Postfach 10 51 49**
**W-2000 Hamburg 1(DE)**

(54) **Schaltungsanordnung zur Umsetzung der Folgefrequenz von Datenblöcken.**

(57) Es wird eine Schaltungsanordnung beschrieben, die der Umsetzung der Folgefrequenz f1 von Datenblöcken eines Eingangssignals (a) in ein Ausgangssignal (b) mit einer Datenblockfolgefrequenz f2 dient.

Die Schaltungsanordnung enthält einen Schreib-Lese-Speicher (1) mit der Speicherkapazität für einen Datenblock. Ein Schreib- und ein Lesezähler (2, 3) erzeugen zyklisch Adressen für das Einschreiben und Auslesen der Daten aus dem Schreib-Lese-Speicher (1). Mit einer Steuerung (4) für die Zähler (2, 3) werden die Taktfrequenzen für die Zähler (2, 3), die Zeitdauern für ihren Stillstand und der Unterschied ihrer Zählerstände derart festgelegt, daß ausschließlich vollständige Bilder mit der Frequenz f2 ausgelesen werden.

EP 0 521 566 A2

FIG.1

Die Erfindung bezieht sich auf eine Schaltungsanordnung zur Umsetzung der Folgefrequenz f1 von Datenblöcken eines Eingangssignales in ein Ausgangssignal mit einer Datenblockfolgefrequenz f2.

Eine derartige Schaltungsanordnung kann z.B. zur Umsetzung von Bildfolgefrequenzen eingesetzt werden. Bei den beiden Signalen handelt es sich dann um Videosignale unterschiedlicher Normung. Die Datenblöcke sind als Videobilder und die Datenblockfolgefrequenzen als Bildfolgefrequenzen der einzelnen Videosignale anzusehen. Ein Beispiel wäre die Umsetzung eines Videosignales vom amerikanischen NTSC-System mit 59,94 Bildwechseln in der Sekunde in das europäische System mit 50 Bildwechseln in der Sekunde.

Bei einer derartigen Umsetzung eines Videosignals ist im Videosignal mit der Bildfolgefrequenz f1 die Folgefrequenz der Daten der Bildpunkte (= Pixelfrequenz) innerhalb eines Videobildes und auch die zeitliche Länge der Austastlücke im allgemeinen festgelegt. Häufig ist die Frequenz, mit der die Bildpunktdaten im Videosignal mit der Bildfolgefrequenz f2 auftreten, und die Länge der Austastlücke in einem Rahmen frei einstellbar, vorausgesetzt, die Summe aus aktiver Zeit (Zeit, in der Bildpunktdaten anfallen) und Austastlücke eines jeden Videobildes ergibt eine vorgegebene Bildtaktperiode T2 = 1/f2. Zur Vermeidung unschöner Bildeindrücke ist bei der Umsetzung nur die Wiederholung oder das Auslassen vollständiger Bilder zugelassen.

Der Erfindung liegt die Aufgabe zugrunde, eine Schaltungsanordnung mit den genannten Eigenschaften anzugeben, die sich durch ihren geringen Schaltungsaufwand auszeichnet.

Diese Aufgabe wird bei einer Schaltungsanordnung der eingangs genannten Art durch folgende Merkmale gelöst:

einen adressierbaren Schreib-Lese-Speicher mit der Speicherkapazität für einen Datenblock,

einen Schreibzähler und einen Lesezähler zur Erzeugung von zyklischen Adressen für das Einschreiben und das Auslesen der Datenblöcke aus dem Schreib-Lese-Speicher und

eine Taktsteuerung zur Festlegung der Takte für die Zähler, der Zeitdauern für ihren Stillstand und des Unterschieds ihrer Zählerstände.

Der Erfindung liegt die Erkenntnis zugrunde, daß sich die gestellte Aufgabe mit einem einzigen Speicher der genannten Kapazität lösen läßt, wenn dieser nahezu gleichzeitig an verschiedenen Stellen beschrieben und gelesen werden kann. Derartige Speicher sind heute auf dem Markt als SRAMs, DRAMs oder Video-RAMs zu haben.

Eine Synchronisation der Taktsteuerung ergibt sich dadurch, daß ein aus dem fest vorgegebenen Signal ableitbares Synchronisationssignal zur Synchronisation der Taktsteuerung vorgesehen ist. Unter fest vorgegebenen Signal ist dabei beispielsweise das Eingangssignal mit einem festen Eingangsraster gegenüber dem Ausgangssignal mit einem in Grenzen frei wählbaren Ausgangsraster zu verstehen.

Die Festlegung der Taktfrequenzen für die Zähler, die Zeitdauern für ihren Stillstand und der Unterschied ihrer Zählerstände kann einmalig erfolgen, wenn die Größe D = (z2 - z1)pf1 betragsmäßig größer als null, jedoch kleiner oder gleich eins ist, wobei z1 und z2 jeweils die Laufzeiten der Zähler für einen Zyklus bedeuten und f2/f1 = p/q gilt, mit p und q als ganze teilerfremde Zahlen.

Eine Synchronisation einer beispielweise als Codier-/Decodiereinrichtung ausgebildeten Übernahmeeinrichtung nur Übernahme des Ausgangssignals wird dadurch ermöglicht, daß die Taktsteuerung auch zur Lieferung eines weiteren Synchronisationssignals an die Übernahmeeinrichtung der flexiblen Seite vorgesehen ist.

Eine mögliche Anwendung der Schaltungsanordnung ist dadurch gegeben, daß das Eingangssignal ein Videosignal mit der Bildfolgefrequenz f1 und das Ausgangssignal ein Videosignal mit der Bildfolgefrequenz f2 ist.

Ein mögliches Ausführungsbeispiel für die Taktsteuerung ergibt sich dadurch, daß die Taktsteuerung folgende Merkmale aufweist:

einen Zähler, der zum Betrieb mit einer Basisfrequenz vorgesehen ist und der mit Hilfe des Synchronisationssignals am Beginn seiner Zählperiode zurücksetzbar ist, wobei die Basisfrequenz größer oder gleich der Pixelfrequenzen sowohl des Eingangsignals als auch des Ausgangssignals und ein ganzzahliges Vielfaches der Bildwechselfrequenz des festen Signals ist,

einen mit dem Zähler verbundenen Speicher zur Lieferung von Steuersignalen für die Takte der Zähler und des zweiten Synchronisationssignals,

ein erstes UND-Gatter zur Ansteuerung des Zählers mit dem ersten Synchronisationssignal und einem vom Speicher gelieferten Enable-Signal als Eingangssignale,

ein zweites und drittes UND-Gatter, mit jeweils der Basisfrequenz und dem vom Speicher gelieferten Steuersignal als Eingangssignale zur Lieferung der Takte für die Zähler.

Anhand der Figuren soll die Erfindung und Ausführungsbeispiele von ihr näher erläutert und beschrieben werden. Im folgenden wird der Kürze wegen für eine Leitung, für das auf ihr übertragene Signal und für die Anschlüsse dieser Leitung das gleiche Bezugzeichen verwendet.

Es zeigen:

Fig. 1 ein Prinzipdiagramm einer erfindungsgemäßen Anordnung,

Fig. 2 bis 4 Zeitdiagramme von Schreib-Lese-Vorgängen,

Fig. 5 ein Ausführungsbeispiel für eine Taktsteuerung und

Fig. 6a, b jeweils ein Blockschaltbild eines Übertragungssystems.

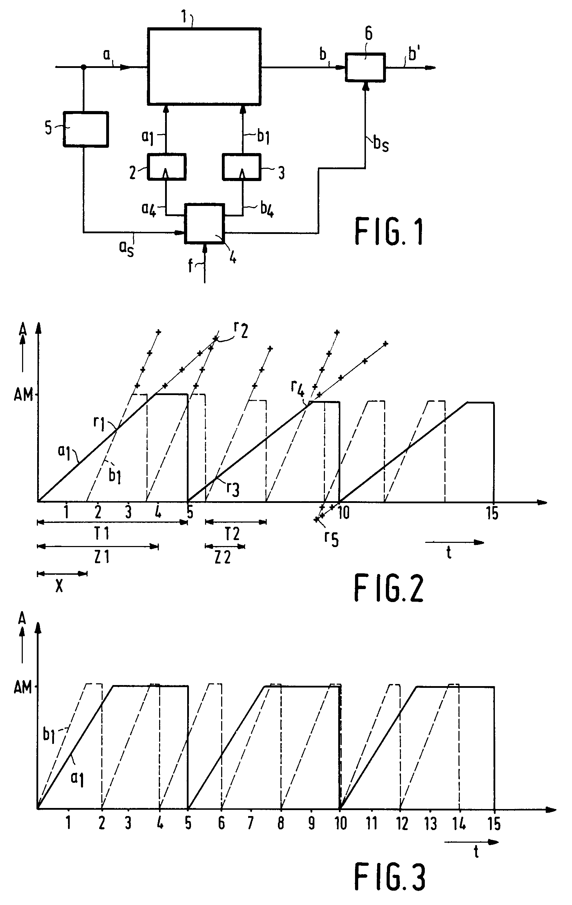

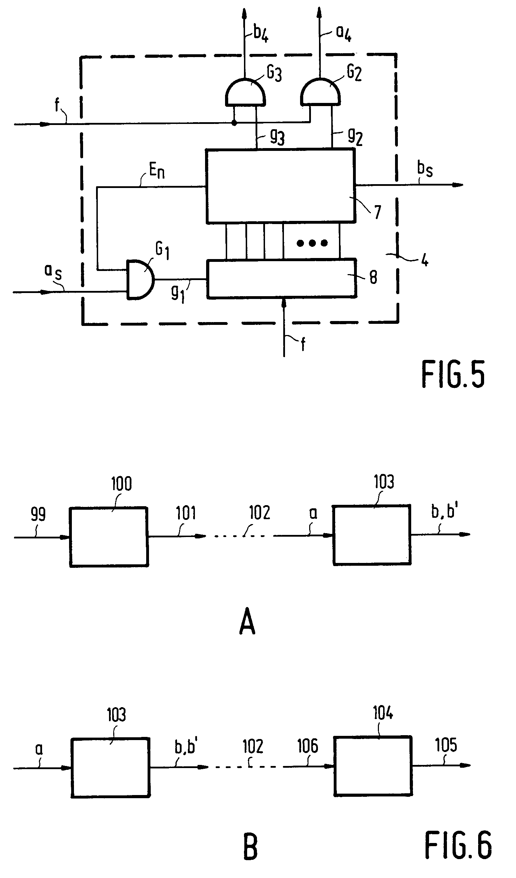

Nach Fig. 1 wird in einen Schreib-Lese-Speicher 1 ein erstes Videosignal a eingeschrieben und ein zweites Videosignal b ausgelesen. Der adressierbare Speicher 1 wird über einen Schreibzähler 2 und einen Lesezähler 3 mit Schreibadressen a1 und Leseadressen b1 versorgt. Die Takte für die beiden Zähler 2, 3 werden von einer Taktsteuerung 4 geliefert, die über eine Leitung a4 den Takt für den Schreibzähler 2 und über eine Leitung b4 den Takt für den Lesezähler 3 überträgt. Die Takte a4 und b4 enthalten zeitliche Bereiche, in denen die Taktflanken, mit denen die Zähler weitergestellt werden, gleichmäßig verteilt sind (aktive Zeiten) und wiederum andere Bereiche, in denen keine Taktflanken auftreten, die Zähler 2 und 3 also stillstehen (Austastlücken). Die Erzeugung der Takte a4 und b4 hat so zu erfolgen, daß während des Hochzählens der Schreibadressen a1 und der Leseadressen b1 niemals eine Überschneidung auftritt, da sonst in den Videobildern des Ausgangssignales b Mischungen von unterschiedlichen Bildern des Eingangssignals a auftreten. Es dürfen also nur ganze Bilder des Eingangssignals a mehrfach ausgelesen oder überlesen werden. Der Taktsteuerung 4 wird ein Synchronisationssignal $a_s$ zugeführt, das über eine Einrichtung 5 aus dem Eingangssignal a abgeleitet wird. Darüber hinaus wird die Taktsteuerung 4 von einer Basisfrequenz f angesteuert. Im dargestellten Ausführungsbeispiel mit einem festen Eingangsraster und einem in Grenzen wählbaren Ausgangsraster liefert die Taktsteuerung 4 ein weiteres Synchronisationssignal $b_s$ an eine Umsetzeinrichtung 6, der das Ausgangssignal b zugeführt wird. Die Umsetzeinrichtung 6, die beispielsweise Teil einer Kodier-/Dekodiereinrichtung ist, benötigt das Synchronisationssignal $b_s$ zur Umwandlung des Ausgangssignals b in ein dekodiertes Ausgangssignal b'. Auf eine mögliche Realisierung der Taktsteuerung 4 wird im Zusammenhang mit Fig. 5 näher eingegangen.

Zur grafischen Veranschaulichung dieser Verhältnisse dient die Fig. 2. Sie zeigt einen willkürlich gewählten Verlauf der Schreibadressen a1 als Funktion der Zeit und dazu einen eben solchen Verlauf der Leseadressen (unterbrochen gezeichnet) b1. Beide Funktionen a1 und b1 beginnen bei der Adresse 0 und steigen dann mit gleichmäßiger Geschwindigkeit (aktive Geraden) auf eine höchste Adresse AM an. Dieser Vorgang ist der Einfachheit halber als kontinuierlicher Vorgang in Fig. 2 wiedergegeben. Nach dem Erreichen der höchsten Adresse AM kann sich bei beiden Funktionen eine Wartezeit oder inaktive Zeit anschließen, die mit der Austastlücke des betreffenden Videosignales übereinstimmt. Als Warteadresse wurde willkürlich die höchste Adresse AM gewählt. In der zugehörigen Speicherstelle ist keine aktive Bildinformation gespeichert (=Austastlücke). Gleiches gilt für die Speicherstelle mit der Adresse 0. Da auf diese Speicherstellen keine veränderlichen Informationen übergeben werden, dürfen diese beiden Adressen gleichzeitig vom Schreib- und vom Lesezähler erzeugt werden.

Nach der Wartezeit wird wieder mit der Adresse 0 begonnen. Sowohl der Schreibvorgang als auch der Lesevorgang sind periodisch mit der Periode T1 bzw. T2. Die aktive Zeit des Schreibvorganges ist mit z1 bezeichnet und die aktive Zeit des Lesevorganges mit z2. Die Zeiten z1 und z2 sind die Laufzeiten der Zähler 2, 3 nach Fig. 1 für einen Zyklus. Der Lesevorgang beginnt mit einer Zeit, die gegenüber dem Startpunkt des Schreibvorganges um die Zeit x verschoben ist. Für das Verhältnis der Perioden gilt allgemein die Gleichung T1/T2 = p/q, wobei der größte gemeinsame Teiler der ganzen Zahlen p und q eins ist. In Fig. 2 ist p/q = 5/2. Ein Schneiden der Funktionen a1 und b1 ist nur bei der Adresse 0 und bei der höchsten Adresse AM erlaubt. Schnittpunkte der aktiven Geraden wie r1 und r3 sind verboten. Erlaubt dagegen sind Schnittpunkte wie r2, r4 und r5. Der Sprung von der höchsten Adresse AM auf die Adresse 0 ist an keine Bedingung geknüpft.

Allgemein läßt sich daher sagen, daß sämtliche Lese- und Schreibfunktionen a1 und b1 zugelassen sind, deren Kenngrößen derart beschaffen sind, daß alle Schnittpunkte ihrer aktiven Geraden auf oder über der Adresse AM oder auf oder unter der Zeitachse liegen. Diese Bedingung führt zu einer Einschränkung der Funktionen a1 und b1, die nun kurz erläutert werden soll. Verwendet man folgende Abkürzungen

$$Z1 = z1/T1; \quad Z2 = z2/T2; \quad X = x/T2; \quad T1/T2 = p/q = f2/f1$$

und

$$D = qZ2 - pZ1 = (z2 - z1)pf1,$$

so hat das Problem nur Lösungen, wenn

3

$$0 < |D| \leq 1 \qquad (1)$$

gewählt wird und Xq derart bestimmt wird, daß

$$1 + [Xq] - Xq \geq D > 0 \qquad (2)$$

oder für $[xq] \neq Xq$

$$-1 \leq [Xq] - Xq \leq D < 0 \qquad (3)$$

gilt. Hierbei bedeutet [Xq] die größte ganze Zahl, die kleiner oder gleich Xq ist.

Aus den Formelzeilen (1), (2) und (3) geht hervor, daß eine von null verschiedene Verschiebung (X > 0) der beiden Funktionen a1 und b1 gegeneinander das Problem nicht lösbar macht, wenn es ohne Verschiebung (X = 0) schon unlösbar war. In Fig. 2 sind die aktiven Zeiten für die Funktionen a1 und b1 so gewählt, daß Z1 = 4/5 und Z2 = 3/4. Folglich wird D = -5/2. Wegen (1) hat das Problem mit den angegebenen Parametern keine Lösung.

Unterstellt man jedoch, daß in der ersten Funktion a1 die aktive Zeit Z1 veränderbar ist, ohne alle anderen Parameter zu verändern, dann läßt sich immer ein Z1 angeben, mit dem das Problem lösbar ist. Im Falle der Verhältnisse nach Fig. 2 sind alle Z1 zulässig, die der Bedingung

$$1/10 \leq Z1 \leq 1/2; \ Z1 \neq 3/10 \qquad (4)$$

genügen. Mit Z1 = 1/2 ist D zu -1 festgelegt. Daher darf Xq wegen (3) nur ganzzahlig sein, also nur die Werte 0, 1, 2, 3, 4 usw. annehmen. Mit Z1 = 1/2 und sonst unveränderten Parametern sind die Verhältnisse in Fig. 3 noch einmal dargestellt. Die Verschiebung der Kurve a1 gegenüber der Kurve b1 wurde zu null gewählt. Mit dieser und allen anderen erlaubten Verschiebungen gibt es keine verbotenen Schnittpunkte.

Keine Lösung ergibt sich u.a., wenn die aktive Zeit der einen Funktion größer als die doppelte Periode der anderen ist, wie sich anschaulich klarmachen läßt und wie sich außerdem an der Bedingung (1) überprüfen läßt.

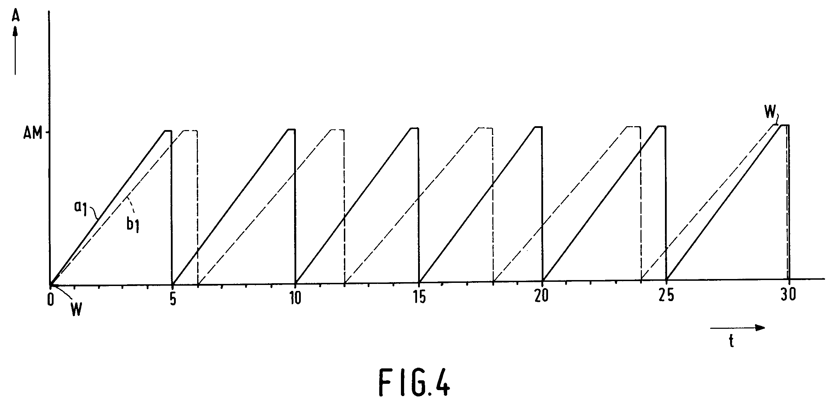

Fig. 4 zeigt ein weiteres Beispiel, das etwa der Umsetzung des eingangs erwähnten europäischen Systems in das amerikanische System entspricht, d.h., es ist T1/T2 = 5/6. Wiederum - wie auch in den anderen Diagrammen - ist in Fig. 4 als Zeiteinheit ein Bruchteil (hier 1/30) der gemeinsamen Periodendauer 6T1 = 5T2 der Schreib- und Lesefunktion gewählt und dabei T1 = p = 5 und T2 = q = 6 gesetzt. Die gemeinsame Periodendauer, nach der der Umsetzvorgang wieder von vorne beginnt, hat dabei den Wert 30. Die Schreibfunktion a1 besitzt eine Austastlücke von 4%, also eine aktive Zeit Z1 von 0,96. Wegen (1) darf daher die Lesefunktion b1 eine aktive Zeit Z2 haben, die der Bedingung

$$0,6\overline{3} \leq Z2 \leq o,9\overline{7} \ ; \ Z2 \neq 0,8 \qquad (5)$$

genügt. Für Z2 = 0,9 wird D = 0,6. Daher sind nach (2) Verschiebungen zulässig, die der Bedingung

$$0 \leq Xq - [Xq] \leq 0,4 \qquad (6)$$

genügen. Durch (6) sind Intervalle definiert, die sich mit der Periode 1 auf der Zeitachse wiederholen. Das dem Nullpunkt am nächsten liegende Intervall w ist in Fig. 4 eingetragen.

Allgemein gilt: T1 = k*p und T2 = k*q mit beliebigem k, wobei k = 1 willkürlich gewählt wurde.

Das in Figur 5 ausgestellte Ausführungsbeispiel einer Taktsteuerung 4, wie sie in der in Figur 1 dargestellten Schaltungsanordnung verwendet werden kann, weist einen Zähler 8 auf, dem eine Basisfrequenz f sowie ein von einem ersten UND-Gatter G1 geliefertes Signal g1 zugeführt wird. Die Eingangssignale des ersten UND-Gatters G1 sind ein erstes Synchronisationssignal $a_s$, das, wie im Zusammenhang mit Figur 1 beschrieben ist, aus dem Eingangssignal abgeleitet werden kann, sowie ein Enable-Signal En, das von einem Speicher 7 geliefert wird. Der Speicher 7 ist über Verbindungsleitungen 9 mit dem Zähler 8 verbunden. Die Ausgangssignale des beispielsweise als ROM ausgebildetetn Speichers 7 sind ein zweites

Synchronisationssignal $b_s$ sowie zwei Steuersignale g2, g3 zur Ansteuerung eines zweiten G2 und eines dritten G3 Gatters. Den Gattern G2, G3 wird darüber hinaus als Eingangssignal jeweils die Basisfrequenz f zugeführt. Das zweite G2 und dritte G3 UND-Gatter liefert Taktsignale a4, b4 für den in Figur 1 dargestellten Schreib- bzw. Lesezähler.

Für die Wahl der Basisfrequenz f zur Ansteuerung des Zählers 8 sowie der Gatter G2, G3 ist es erforderlich, daß die Basisfrequenz f größer oder gleich der Bildfolgefrequenzen des Eingangs- und des Ausgangssignals und größer als die höchste Frequenz des Eingangs- oder Ausgangssignals und ein Vielfaches der Pixelfrequenz des Eingangssignals, d. h. der "festen" Seite ist. Das Enable-Signal En erlaubt eine Rücksetzung des Zählers 8 nur mit oder nach Ablauf der gemeinsamen Periode der Bildfolgefrequenzen des Eingangssignals und des Ausgangssignals.

Figur 6a zeigt ein Übertragungssystem zur Übertragung von Videosignalgen über eine Übertragungsstrecke 102. Hierzu wird ein Videosignal 99 über eine Sendeeinrichtung 100 als Sendesignal 101 an den Übertragungskanal 102 gegeben. Auf der Empfangsseite wird ein Empfangssignal als Eingangssignal a einer Schaltungsanordnung 103 zur Umsetzung der Bildfolgefrequenzen zugeführt, wie sie in Figur 1 dargestellt ist. Die Schaltungsanordnung zur Umsetzung der Bildfolgefrequenzen kann dabei auch Teil einer Kodier/Dekodiereinrichtung zur Dekodierung von kodiert übertragenen Videosignalen sein. Am Ausgang der Empfangseinrichtung 103 liegt ein Ausgangssignal b, bzw. b' wobei die Bezugszeichen den in Figur 1 eingefühten Bezugzeichen entsprechen.

Figur 6b zeigt ein weiteres Blockschaltbild eines Übertragungssystems insbesondere zur Übertragung von Videosignalen. Dabei wird ein zu übertragendes Videosignal a einer Sendeeinrichtung 103 zugeführt, die eine Schaltungseinordnung zur Umsetzung der Bildfolgefrequenzen des Eingangssignals a in das Ausgangssignal b, bzw. b' aufweist. Das Ausgangssignal der Sendeeinrichtung 103 b, bzw. b' wird über einen Übertragungskanal 102 an eine Empfangseinrichtung 104 übertragen. Das Eingangssignal der Empfangseinrichtung 104 ist mit 106 und das Ausgangssignal mit 105 bezeichnet. Auch die in Figur 6b dargestellte Sendeeinrichtung 103 kann eine Kodiereinrichtung mit einer in Figur 1 dargestellten Schaltungsanordnung zur Umsetzung der Bildfolgefrequenzen aufweisen.

**Patentansprüche**

1. Schaltungsanordnung zur Umsetzung der Folgefrequenz f1 von Datenblöcken eines Eingangssignales (a) in ein Ausgangssignal (b) mit einer Datenblockfolgefrequenz f2,
gekennzeichnet durch,
einen adressierbaren Schreib-Lese-Speicher (1) mit der Speicherkapazität für einen Datenblock,
einen Schreibzähler (2) und einen Lesezähler (3) zur Erzeugung von zyklischen Adressen für das Einschreiben und das Auslesen der Datenblöcke aus dem Schreib-Lese-Speicher (1) und
eine Taktsteuerung (4) zur Festlegung der Takte (a4, b4) für die Zähler (2, 3), der Zeitdauern für ihren Stillstand und des Unterschieds ihrer Zählerstände.

2. Schaltungsanordnung nach Anspruch 1,
dadurch gekennzeichnet,
daß ein aus dem festen Signal (a) ableitbares Synchronisationssignal ($a_s$) zur Synchronisation der Taktsteuerung (4) vorgesehen ist.

3. Schaltungsanordnung nach einem der Ansprüche 1 oder 2,
dadurch gekennzeichnet,
daß die Festlegung der Takte (a4, b4) für die Zähler (2, 3), der Zeitdauern für ihren Stillstand und des Unterschieds ihrer Zählerstände einmalig erfolgt, wenn eine Größe D = (z2 - z1)pf1 betragsmäßig größer als null, jedoch kleiner oder gleich eins ist, wobei z1 und z2 jeweils die Laufzeiten der Zähler (2, 3) für einen Zyklus bedeuten und f2/f1 = p/q gilt, mit p und q als ganze teilerfremde Zahlen.

4. Schaltungsanordnung nach einem der Ansprüche 1 bis 3,
dadurch gekennzeichnet,
daß die Taktsteuerung (4) auch zur Lieferung eines weiteren Synchronisationssignals ($b_s$) an eine vom Ausgangssignal (b) gespeiste Übernahmeeinrichtung (6) vorgesehen ist.

5. Schaltungsanordnung nach einem der Ansprüche 1 bis 4,
dadurch gekennzeichnet,
daß das Eingangssignal (a) ein Videosignal mit der Bildfolgefrequenz f1 und das Ausgangssignal (b) ein Videosignal mit der Bildfolgefrequenz f2 ist.

6. Schaltungsanordnun nach Anspruch 5,
dadurch gekennzeichnet,
daß die Taktsteuerung (4) folgende Merkmale aufweist:
einen Zähler (8), der zum Betrieb mit einer Basisfrequenz (f) vorgesehen ist und der mit Hilfe des Synchronisationssignals ($a_s$) am Beginn seiner Zählperiode zurücksetzbar ist, wobei die Basisfrequenz (f) größer oder gleich der Pixelfrequenzen sowohl des Eingangsignals (a) als auch des Ausgangssignals (b) und ein ganzzahliges Vielfaches der Bildwechselfrequenz des festen Signals (a) ist,
einen mit dem Zähler (8) verbundenen Speicher (7) zur Lieferung von Steuersignalen (g1, g2) für die Takte (a4, b4) der Zähler (2, 3) und des zweiten Synchronisationssignals ($b_s$),
ein erstes UND-Gatter (G1) zur Ansteuerung des Zählers (8), mit dem ersten Synchronisationssignal ($a_s$) und einem vom Speicher (7) gelieferten Enable-Signal (En) als Eingangssignale,
ein zweites (G2) und drittes (G3) UND-Gatter, mit jeweils der Basisfrequenz (f) und dem vom Speicher (8) gelieferten Steuersignal (g2, g3) als Eingangssignale zur Lieferung der Takte (a4, b4) für die Zähler (2, 3).

7. Schaltungsanordnung nach Anspruch 6,
dadurch gekennzeichnet,
daß ein Enable-Signal (En) zur Rücksetzung des Zählers (8) nur mit oder nach Ablauf einer gemeinsamen Periode der Bildfolgefrequenzen (f1, f2) des Eingangssignals (a) und des Ausgangssignals (b) vorgesehen ist.

8. Codier-/Decodier-Einrichtung zur Codierung/Decodierung, insebesondere von Videosignalen (a, b) mit einer Schaltungsanordnung nach einem der Ansprüche 1 bis 7.

9. Übertragungssystem zur Übertragung insbesondere von Videosignalen (a, b) mit einer Schaltungsanordnung (103) nach einem der Ansprüche 1 bis 7.

6

FIG.1

FIG.2

FIG.3

FIG.4

EP 0 521 566 A2

FIG.5

A

B

FIG.6